# EUROPEAN PATENT APPLICATION

(11) **EP 2 816 267 A1**
(43) Date of publication of application: **24.12.2014**
(21) Application number: 14172476.5
(22) Date of filing: 16.06.2014
(51) Int. Cl.: F16K 11/20, A61M 16/20, F17D 1/04, F16K 27/02

(54) **Shut-off valve**

(30) Priority: 18.06.2013 IT GE20130060
(71) Applicant: Behringer S.r.l., 16165 Genova (IT)
(72) Inventor: Ottonello, Roberta, 16146 GENOVA (IT)
(74) Representative: Porsia, Attilio

(57) **Abstract**

Area shut-off valve for systems for supplying medical gases in hospitals, comprising: a single body (1) inside which there is produced a first inlet pipeline (3, 3') of the gas to be distributed; a first general shutter (4) for closing and opening of the valve which can be operated by means of a suitable lever (5) and positioned in said first pipeline (3); at least one pair of outlet pipelines (7, 8) for distribution of the gas placed downstream of said inlet pipeline (3, 3') and of said first shutter (4); and a second shutter (10) placed in one of said two outlet pipelines (7), hence downstream of said first shutter (4), and provided with a related operating lever (11);
the gas delivery pipeline (7) in which said second shutter (10) is positioned is connectable to one or more first user terminal devices of the gas located in the area of the hospital in which the valve is installed; the other of said gas distribution pipelines (8) is adapted to distribute the gas towards one or more second user terminal devices of the gas also located in said area, so that said second distribution pipeline (8) can deliver gas to said second terminal devices even if the second shutter (10) of the first outlet pipeline for distribution of the gas to said first terminal devices is moved to the closed position.

## Description

The present invention relates to area shut-off valves, in particular area shut-off valves provided in systems for supplying medical gases in hospitals.

As is known, systems for supplying medical gases, such as oxygen, carbon dioxide, nitrous oxide, compressed air and/or the like, are installed in hospitals. Each of these gases comprises its own high pressure storage unit and its own distribution pipelines. According to current regulations on the subject of medical gas distribution in hospitals, these gases are subject to a double pressure reduction stage before reaching the final users, which can, for example, be the normal wall-mounted terminal units located in patients' rooms and normally provided for each bed and the pendant units used by surgeons in operating rooms. The gases undergo a first pressure reduction at the outlet of the storage units and subsequently a further pressure reduction, called second reduction stage, on each floor containing a department or operating room. At this point the gases can be distributed in the ward areas, in the operating rooms or wherever they are required.

The zone shut-off valves are installed downstream of this second pressure reduction stage of the gases, and are hence positioned upstream of the user terminal units, regardless of whether these are units for wards or pendant units for surgeons. These area shut-off valves are normal ball valves with one inlet, one outlet, one connection for a gauge and one connection for an emergency inlet.

Again according to the current regulations, downstream of the area shut-off valve of a given gas, it is necessary to install one or more additional maintenance valves, for example placed in the section of the system that delivers the gas to the pendant units of operating rooms.

Currently these additional maintenance valves, which are also ball valves like the area shut-off valve, are placed in series, usually in a remote position with respect to the area shut-off valve, so that a series of works are required to connect and join pipes, causing undesirable increased overall dimensions and, naturally, increasing the risk of leakage and seepage. It must be borne in mind that if the area shut-off valve is located, for example, in a dedicated box at the entrance to an operating room or in a corridor, the additional maintenance valve can be located in sections of pipeline that run along the ceiling of the rooms, and naturally this leads to various disadvantages in terms of tightness, safety and installation costs.

Therefore, the object of the present invention is to produce an area shut-off valve for systems for supplying medical gases in hospitals that can close and generally isolate a given area of the hospital, as provided for by law, which also has an integrated additional maintenance valve, located downstream of the general on-off lever of the valve and consequently overcomes the aforesaid disadvantages of prior art valves.

This object is achieved by the present invention by means of an area shut-off valve for systems for supplying medical gases in hospitals according to the preamble of claim 1.

Advantageously, in the present area shut-off valve, provided in a single body with an inlet and a double outlet, it is also possible to integrate the additional maintenance valve, for example required to isolate the pendant units of operating rooms without also isolating the rest of the area, for example the wall-mounted terminal units. As the present valve is produced in a single and compact body the connectors and couplings required for its installation are reduced to a minimum, with evident advantages in terms of installation operations, safety and overall dimensions; in fact, as mentioned previously, the risk of dangerous gas leakages or seepages increases in proportion to the number of connectors and couplings installed.

Further features and advantages of the present invention will be better understood in the description below, provided purely by way of non-limiting example and with reference to the accompanying drawings, wherein:
- Fig. 1 shows a plan view of an area shut-off valve for medical gases according to the present invention;
- Fig. 2 shows a cross sectional view of the present valve considered according to the line II-II of Fig. 1;
- Fig. 3 shows a cross sectional view of the present valve considered according to the line III-III of Fig. 1; and
- Fig. 4 shows a cross sectional view of the present valve considered according to the line IV-IV of Fig. 1.

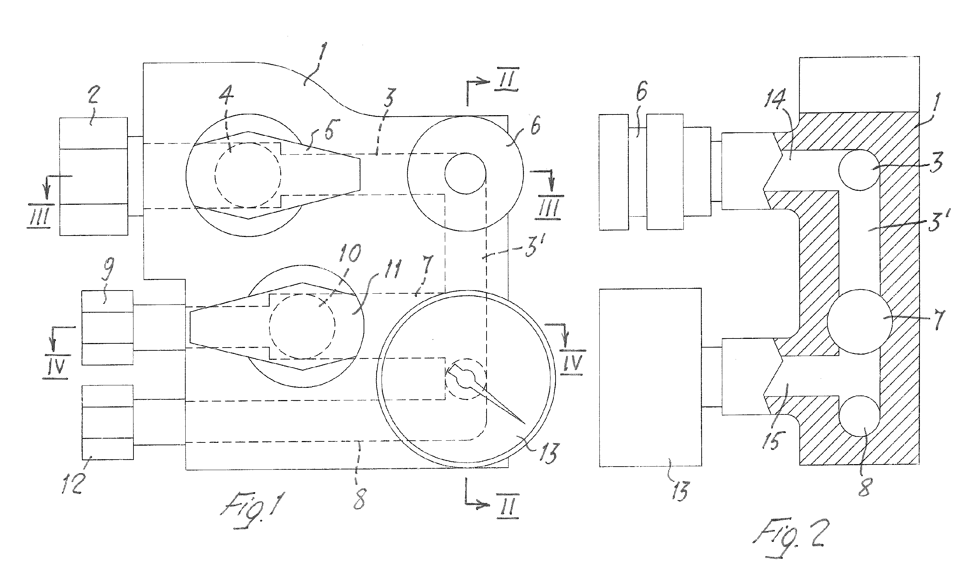

With reference to these accompanying drawings and with particular reference to Fig. 1 thereof, the numeral 1 indicates the single box body of the present valve, which can be manufactured by casting and made of brass or another metallic material. This box body or single block 1 has an inlet connector for a medical gas, such as oxygen, carbon dioxide, compressed air or the like. Downstream of this inlet connector 2, the single body 1 of the valve comprises a first pipeline 3 along which there is positioned a normal ball shutter 4 which can be opened or closed by means of a related general lever 5 for closing the valve and hence for shutting off a given area of the hospital, such as a department. In the figure, it is assumed that the present valve is open so that the shutter 4 is in a position such as to allow gas to pass through the pipeline 3. Downstream of the area shut-off lever 5 there is provided an emergency inlet 6, which, in accordance with the currently regulations on the subject of distribution of medical gases, represents an emergency supply and maintenance point. Downstream of the emergency inlet 6 the pipeline 3 continues for a section 3' placed perpendicular to the section 3 and from which two further pipelines 7 and 8 branch: the first pipeline 7 leads to a first outlet connector 9 by means of which it is possible to feed the gas to one or more terminal units represented, for example, by one or more pendant devices used by surgeons in the operating rooms, while the second pipeline 8 is provided downstream with a second outlet connector 12, by means of which the gas can be carried to one or more of the terminal units normally present above each patient's bed in the hospital. The connector section 3' of the inlet pipeline 3 with the two outlet pipelines 7 and 8 allows the inlet connector 2 and the two outlet connectors 9 and 12 to be positioned on the same side of the single body 1, thereby ensuring even greater compactness of the valve. The two outlet connectors 9 and 12 can be produced with nuts having opposing screw threads, so that operators who make the connections do not accidentally mistake them. This first pipeline 7 is fitted with a normal ball shutter 10 controlled by a related lever 11, by means of which gas can be supplied, or not supplied, to the pendant terminal unit through the connector 9. The lever 11 is also in the open position, so that gas is delivered to the pendant device. The connector 3' is also provided with a gauge 13 for checking the pressure of the gas.

Fig. 2 shows a first cross section of the present valve. In this cross section, there are visible a first through hole 14 for connection of the emergency inlet 6 with the pipeline 3 or 3' and a second through hole 15 for connection of the pipeline 3' with the gauge 13.

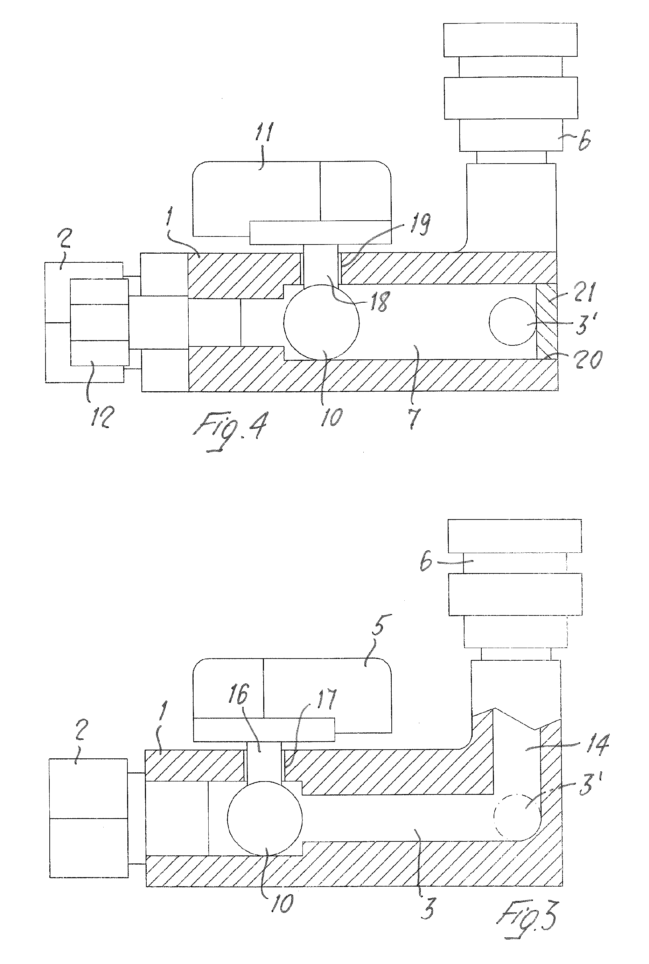

The cross section of Fig. 3 is considered substantially at the first general lever 5 for opening and closing the present valve. This lever 5 comprises a rod 16 connected with the ball shutter 10, so as to be able to rotate it from the open position to the closed position and vice versa. In the single body 1 of the valve there is produced a suitable through hole 17 to allow the rod 16 to pass through.

The cross section of Fig. 4 shows a side elevation of both the first outlet connector 12 and the inlet connector 2 and is considered substantially at the lever 11 for opening and closing the pipeline 7. Also in this case the lever 11 is provided with a rod 8 connected to the ball shutter 10 and passing through a hole 19 produced in the single body 1 of the present valve. In this single body there can be produced one or more access holes to the inside of the valve, see for example the lateral hole 21 closed by a corresponding diaphragm 21.

Operation of the present area shut-off valve with dual function will be apparent from the following description. As mentioned above, area shut-off valves are positioned inside appropriate boxes located, for example, on each floor of the hospital. Assuming the situation of Fig. 1, in this case the levers 5 and 11 are in the open position, so that the medical gas coming from the second pressure reduction stage enters the connector 2, flows along the pipelines 3 and 3' and is delivered at the connectors 9 and 10, from which, by means of appropriate pipes for coupling in these connectors 9 and 10, it will be delivered respectively towards one or more first users represented, for example, by one or more normal pendant units located in an operating room, and towards one or more second users represented by normal terminal units usually located above the bed heads in hospital wards. Assuming that maintenance must be carried out on one or more pendant devices located in an operating room, it is sufficient to turn the lever to the closed position by means of a normal rotation thereof, for example through 90°, so that the normal ball shutter 10 moves to the position to close the pipeline 7. In this situation, the whole of the part of the gas distribution system located downstream of the lever 11, and consequently of the connector 9, will be isolated, while delivery towards the connector 12 and the terminal units above the ward beds will continue normally. If it is also necessary to isolate the terminal units, it is sufficient to close the general shut-off lever 5, so that gases no longer flow downstream of this lever. The general lever 5 can, for example, be closed if it is necessary to isolate a whole floor of a hospital department to carry out maintenance.

Therefore, it is evident that it is extremely advantageous to have, in a single valve body, both the levers with related shutters to shut off the gases to the terminal units and to the pendant units or devices, as by opening the box present in at least one unit in each hospital department it is possible, if necessary, to shut off the whole of the area involved by the distribution of a given gas by means of the lever 5 with related shutter 4, or to shut off only a part of the system, in this case to shut off the pendant units of the operating rooms, by means of the specific lever 11, thereby producing in substance a shut-off valve with a dual function. In this way, as mentioned above, it is possible to advantageously eliminate a whole series of connectors and couplings that would be required if wishing to arrange several ball valves in series and, moreover, positioned remotely, with consequent larger overall dimensions and increased danger of undesirable leakages or seepages. Naturally, each of the medical gases distributed in the hospital will require its own double area shut-off valve made from a single block, for example of brass, according to the present invention.

## Claims

1. Area shut-off valve for systems for supplying medical gases in hospitals, **characterised in that** it comprises: a single body (1) inside which there is produced a first inlet pipeline (3, 3') of the gas to be distributed; a first shutter (4) for general closing and opening of the valve which can be operated by means of a suitable lever (5) and positioned in said first pipeline (3); at least one pair of outlet pipelines (7, 8) for distribution of the gas placed downstream of said inlet pipeline (3, 3') and of said first shutter (4); and a second shutter (10) placed in one of said two outlet pipelines (7), hence downstream of said first shutter (4), and provided with a related operating lever (11); the gas delivery pipeline (7) in which said second shutter (10) is positioned being connectable to one or more first user terminal devices of the gas located in the area of the hospital in which the shut-off valve is installed and the other of said gas distribution pipelines (8) being adapted to distribute the gas towards one or more second user terminal devices of the gas also located in said area, so that said second distribution pipeline (8) can deliver gas to said second terminal devices even if the second shutter (10) of the first outlet pipeline (7) for distribution of the gas to said first terminal devices is moved to the closed position.

2. Area shut-off valve according to claim 1, **characterised in that** said first terminal devices connectable to said first pipeline (7) comprise one or more pendant units used in an operating room.

3. Area shut-off valve according to claim 1, **characterised in that** said second terminal devices connectable to said second pipeline (8) comprise one or more wall-mounted terminal units installed at patients' beds.

4. Area shut-off valve according to claim 1, **characterised in that** the single body (1) of the valve is manufactured by casting and made of a metallic material, such as brass or the like.

5. Area shut-off valve according to claim 1, **characterised in that** it comprises a connector section (3') produced in the single body (1) of the valve and positioned so that the inlet of the gas into said first pipeline (3) and the outlets of the gas from said at least two pipelines (7, 8) are on the same side of the single body (1).

6. Area shut-off valve according to claim 1, **characterised in that** it comprises an emergency inlet (6) positioned downstream of said first shutter (4) and upstream of said two outlet pipelines (7, 8).

7. Area shut-off valve according to claim 1, **characterised in that** it comprises a gauge (13) placed in the connector section (3') between the inlet pipeline (3) and the two outlet pipelines (7, 8).

8. Area shut-off valve according to claim 1, **characterised in that** said two outlet pipelines (7, 8) comprise downstream two connectors (9, 10) provided with opposing internal screw threads.
